# EUROPÄISCHE PATENTANMELDUNG

(11) **EP 2 912 950 A1**
(43) Veröffentlichungstag der Anmeldung: **02.09.2015**
(21) Anmeldenummer: 15153784.2
(22) Anmeldetag: 04.02.2015
(51) Int. Cl.: A23G 7/00, A23G 1/10, A23G 3/02, B08B 9/055, A23G 1/04, B08B 3/08, B08B 3/02, B08B 9/093

(54) **Anlage zur Herstellung und/oder Aufbereitung von Confectionery-Massen und Verfahren zur Reinigung einer Anlage zur Herstellung und/oder Aufbereitung von Confectionery-Massen**

(30) Priorität: 26.02.2014 DE 102014102529
(71) Anmelder: NETZSCH-Feinmahltechnik GmbH, 95100 Selb (DE)
(72) Erfinder: Harbs, Theron, Pomerode/SC (BR); Möschl, Holger, 95100 Selb (DE); Weiland, Lars-Peter, 95173 Schönwald (DE); Devegili, Sergio, 89107000 Pomerode, SC (BR)
(74) Vertreter: Benninger, Johannes

(57) **Zusammenfassung**

Die Erfindung bezieht sich auf eine Anlage zur Herstellung und / oder Aufbereitung von Confectionery- Massen aus mindestens einem flüssigen Rohstoff und körnigen und / oder pulverförmigen Rohstoffen. Die Anlage umfasst mindestens einen ersten Mischbehälter und mindestens eine weitere produktverarbeitende Einrichtung. Der erste Mischbehälter weist mindestens einen Rohstoffeinlass und einen Produktauslass und eine Mischvorrichtung zum zumindest weitgehend homogenen Vermischen der Rohstoffe auf. Erfindungsgemäß umfasst zumindest der Mischbehälter in einem oberen Behälterbereich mindestens eine Sprüheinrichtung zur Zuführung des mindestens einen flüssigen Rohstoffs, wobei mindestens ein Austrittskegel der Sprüheinrichtung zumindest bereichsweise in Richtung einer Innenwandfläche des ersten Mischbehälters gerichtet ist. Insbesondere deckt der mindestens eine Austrittskegel die gesamte Innenwandfläche und / oder Deckenfläche im oberen Behälterbereich des ersten Mischbehälters ab.

Die Erfindung bezieht sich weiterhin auf ein Verfahren zur Reinigung einer Anlage zur Herstellung und / oder Aufbereitung von Confectionery- Massen.

## Beschreibung

Die vorliegende Erfindung betrifft eine Anlage zur Herstellung und / oder Aufbereitung von Confectionery- Massen und ein Verfahren zur Reinigung einer solchen Anlage gemäß den Merkmalen der Oberbegriffe der Ansprüche 1 und 8.

Die Erfindung betrifft eine Anlage und ein Verfahren zur Herstellung und / oder Aufbereitung von Confectionery- Massen. Unter Confectionery- Massen versteht man insbesondere die Grundzusammensetzung von vielen Süßwaren, beispielsweise Schokolade, Pralinen, zart schmelzende Umhüllungen, leckere Brotaufstriche, Füllmassen und so weiter.

Bislang lag der Schwerpunkt in der Produktionsplanung hauptsächlich auf einem hohen Produkt- Durchsatz. Da bei einem Produktwechsel die Anlage jeweils vollständig gereinigt werden muss, um Produktreste im System oder Effekte durch Kreuzkontaminationen auszuschließen, wurde insbesondere eine geringere Produktvielfalt in Kauf genommen. Das verringert nicht nur die Flexibilität bei der Umstellung von Produktlinien, sondern auch die Auslastung der Anlagen und damit die Wirtschaftlichkeit.

Im Vergleich zur milchverarbeitenden Industrie, zur Getränkeindustrie oder gar zur Pharmaindustrie genießen die Süßwarenhersteller in punkto nachweisbar keimfreier Produktion bislang einen klaren Vorteil: Kakao wirkt wie ein Antioxidans, Zucker wie ein natürliches Konservierungsmittel und der Wassergehalt der meisten Confectionery- Massen ist sehr gering. Dadurch ist die mögliche Verkeimungsgefahr der Produkte extrem gering. Dies resultiert unter anderem daher, dass im Vergleich zu vielen anderen industriellen Produktionsabläufen in der Süßwarenindustrie mit hohen Temperaturen und in trockener Umgebung gearbeitet wird. Die dominierenden Rohstoffe wie Zucker, Kakao und die meisten Fette sind grundsätzlich mikrobiologisch unkritisch.

Dessen ungeachtet legt der moderne Konsument auch bei den emotional geprägten Confectionery-Produkten gesteigerten Wert auf Qualitätssicherheit-sowohl bei den Rohstoffen als auch erst recht bei der Verarbeitung. Für die Hersteller bedeutet das im Einzelnen, dass die Nachfrage nach hochwertigen, hygienisch verarbeiteten Produkten zunehmen wird. Weiterhin steigen auch die Anforderungen nach transparenter und lückenloser Information über die Produkte und ihre Herstellprozesse. Ferner dürften auch amtliche Überwachungsstellen die Hygiene und Qualität in der Produktion von Confectionery-Massen in Zukunft strenger bewerten. Insgesamt ist davon auszugehen, dass die Anforderungen für die Produktionsanlagen künftig höher liegen werden als bisher.

Weiterhin diversifizieren die Produktprogramme der Hersteller zunehmend, wobei die jeweiligen Stückzahlen sinken. Demzufolge gewinnen Wirtschaftlichkeit und Wirksamkeit von Reinigungsprozeduren und Reinigungsvorrichtungen immer mehr an Bedeutung. Herkömmlicherweise müssen bei einem Produktwechsel alle Komponenten einer Anlage auseinander genommen, gereinigt, getrocknet und anschließend wieder zusammengesetzt werden. Dies ist sehr zeit und kostenintensiv. Insbesondere muss darauf geachtet werden, dass keine Feuchtigkeit in die Anlage gelangt, da dies die Gefahr von Keimbildung mit sich bringt.

DE 19637098 A1 beschreibt eine Vorrichtung zum Mischen und / oder Verfeinern von Schokoladenmassen. Hierbei kann ein im Wesentlichen der Luft ausgesetzter, sich entlang seiner Längsachse erstreckender Kanal mit dem Conchenbehälter verbunden sein. In Verlängerung dieser Längsachse kann ein Reinigungswerkzeug in den Kanal eingeführt werden.

DE 69002057 T2 beschreibt einen Reaktor für die Behandlung von flüssigem Kakao und seinen Derivaten. Bei dem Reaktor ist die Pumpe der Umlaufeinrichtungen außerhalb des Behälters angebracht und wird von Einrichtungen angetrieben, die von den Antriebseinrichtungen für die drehende Welle getrennt sind. Ferner weisen die Umlaufeinrichtungen eine Saugleitung auf, die den besagten Auslauf an dem Behälter mit der Pumpe verbindet, und eine Förderleitung von der Pumpe bis zum Inneren des Behälters und Einrichtungen für das Einführen von Medien in den flüssigen Kakao sind mit der besagten Saugleitung verbunden. Die besagten Einrichtungen für das Einführen von Medien können insbesondere Einrichtungen für das Einführen von Wasser oder von wässerigen Lösungen und/oder Einrichtungen für das Einführen von Luft aufweisen. Um den Reaktor einfach entleeren zu können, sieht eine besondere Art der Ausführung vor, dass die Pumpe reversibel ist, dass der erste Dreiwegschieber in der besagten Saugleitung angeordnet ist, und dass die besagte Förderleitung einen Boden des Behälters in der Nähe einer tiefen Stelle dieses Bodens durchquert und Öffnungen aufweist, die mit dem Inneren des Behälters in Verbindung stehen und die Entleerung der Stoffe, die sich an der besagten tiefen Stelle abgesetzt haben, durch Absaugung ermöglichen.

US 20050056707 A1 beschreibt einen Düsenaufsatz, insbesondere für Vorrichtungen in der Lebensmittelherstellung, mit dem in einer Abgabedüse vorhandenes Restprodukt mittels eines Gasflusses entfernt werden kann.

Aufgabe der Erfindung ist es, eine Anlage und ein Verfahren zur Herstellung und / oder Aufbereitung von Confectionery- Massen bereitzustellen, die eine wirtschaftliche und hygienische Produktion auch kleiner Mengen an Confectionery-Massen erlaubt.

Die obige Aufgabe wird durch eine Anlage zur Herstellung und / oder Aufbereitung von Confectionery- Massen und ein Verfahren zur Reinigung einer solchen Anlage gelöst, die die Merkmale in den Patentansprüchen 1 und 8 umfassen. Weitere vorteilhafte Ausgestaltungen werden durch die Unteransprüche beschrieben.

Die Erfindung betrifft eine Anlage zur Herstellung und / oder Aufbereitung von Confectionery- Massen aus mindestens einem flüssigen Rohstoff und körnigen und / oder pulverförmigen Rohstoffen. Bei dem flüssigen Rohstoff handelt es sich in der Regel um ein Fett und / oder Öl. Vielfach werden Fette verwendet, die bei normaler Raumtemperatur in einem festen Zustand vorliegen. Diese müssen vor der Zugabe zu den körnigen und / oder pulverförmigen Rohstoffen aufgeschmolzen werden. Die körnigen und / oder pulverförmigen Rohstoffe sind beispielsweise Kristallzucker und / oder Puderzucker, Kakao oder dergleichen.

Die Anlage umfasst mindestens einen ersten Mischbehälter mit einer Mischvorrichtung zum zumindest weitgehend homogenen Vermischen der Rohstoffe. Um die Rohstoffe in den ersten Mischbehälter einzufüllen, weist dieser mindestens einen Rohstoffeinlass und einen Produktauslass auf. Die Anlage kann weitere produktverarbeitende Einrichtungen umfassen, insbesondere mindestens eine Mahlvorrichtung zum Vermahlen der körnigen und / oder pulverförmigen Bestandteile der Rohstoffmischung. Beispielsweise kann eine vorzerkleinernde Mahlvorrichtung vorgesehen sein, mit der körnige Rohstoffe vor dem Einfüllen in den Mischbehälter vorvermahlen werden. Weiterhin kann eine nachgeordnete Mahlvorrichtung zum Feinvermahlen der in dem Mischbehälter mit dem Fett und / oder Öl vermischten körnigen und / oder pulverigen Rohstoffen vorgesehen sein.

Erfindungsgemäß weist der erste Mischbehälter in einem oberen Behälterbereich mindestens eine Sprüheinrichtung zur Zuführung des mindestens einen flüssigen Rohstoffs in den Mischbehälter auf. Die Sprüheinrichtung kann insbesondere dem Deckel des Mischbehälters zugeordnet sein, beispielsweise kann die Sprüheinrichtung am Deckel des Mischbehälters hängend angeordnet sein. Der Austrittskegel, mit dem der flüssige Rohstoff vom Sprühkopf aus in den Mischbehälter eingesprüht wird, ist dabei zumindest bereichsweise in Richtung einer Innenwandfläche des ersten Mischbehälters gerichtet und deckt die gesamte Innenwandfläche und / oder Deckenfläche im oberen Behälterbereich des ersten Mischbehälters zumindest weitgehend vollständig ab. Vorzugsweise sind im oberen Bereich des ersten Mischbehälters mindestens zwei oder mehr Sprühköpfe angeordnet, deren Austrittskegel in ihren aneinandergrenzenden Randbereichen überlappen, so dass der flüssige Rohstoff die Innenwandflächen im oberen Behälterbereich des ersten Mischbehälters weitgehend vollständig benetzt.

Die körnigen und / oder pulverförmigen Rohstoffe tendieren dazu, beim Einfüllen in den ersten Mischbehälter zu stauben und sich dann insbesondere an den oberen Innenwandflächen des ersten Mischbehälters festzusetzen, die im befüllten Zustand des ersten Mischbehälters nicht mit der Rohstoffmischung in Kontakt sind. Der erste Mischbehälter wird insbesondere nicht vollständig befüllt, sondern nur bis zu maximal 80% seinen Behälterinnenvolumens, da bei einer Befüllung des Behälterinnenvolumens zu mehr als 80% ein Vermischen der Rohstoffe durch die Mischvorrichtung nur schwer möglich wäre. Durch das Einsprühen des flüssigen Rohstoffs in einen oberen Bereich des ersten Mischbehälters wird verhindert, dass sich noch nicht mit dem flüssigen Rohstoff vermischte beziehungsweise durch den flüssigen Rohstoff gebundene körnige und / oder pulverförmige Rohstoffe an den Innenwandflächen im oberen Behälterbereich des ersten Mischbehälters festsetzen. Der Innenraum des ersten Mischbehälters kann weiterhin dergestalt ausgebildet sein, dass er vorzugsweise keine Ecken und / oder Kanten sondern vorzugsweise nur Rundungen aufweist, in denen sich die Rohstoffmischung beziehungsweise einzelne Rohstoffe nur schwer festsetzen können. Weiterhin können die Innenwand-Oberflächen antihaftende Eigenschaften aufweisen, beispielsweise sind die Innenwand- Oberflächen elektropoliert und / oder mit einer Antihaft- Beschichtung versehen.

Gemäß einer bevorzugten Ausführungsform der Erfindung ist die mindestens eine Sprüheinrichtung, vorzugsweise jedoch sind die mindestens zwei oder drei Sprüheinrichtungen, schwenkbeweglich und / oder rotationsbeweglich. Dadurch kann der Bereich der Innenwandflächen, die mit dem flüssigen Rohstoff besprüht und benetzt werden, weiter erhöht und eine vollumfängliche Abdeckung erzielt werden.

Weiterhin ist bei der Anlage vorgesehen, dass zwei prozesstechnisch miteinander gekoppelte produktverarbeitende Einrichtungen jeweils über eine Verbindungsleitung, insbesondere jeweils über eine die zwei produktverarbeitenden Einrichtungen verbindende Ringleitung, miteinander gekoppelt sind. Über die Verbindungsleitung wird die Rohstoffmischung oder Produktmischung von der einen produktverarbeitenden Einrichtung in die zweite prozesstechnisch gekoppelte produktverarbeitende Einrichtung geleitet, beispielsweise gepumpt. Gemäß einer Ausführungsform der Erfindung wird die Rohstoffmischung aus dem Mischbehälter über eine Verbindungsleitung in eine nachfolgende produktverarbeitende Einrichtung gepumpt. Um die Verbindungsleitungen der Anlage komplett zu reinigen, verfügt das System vorzugsweise über Reinigungselemente, denen jeweils eine so genannte Parkposition zugeordnet ist. Die Abmessungen eines Reinigungselementes sind dem Durchmesser der jeweiligen Verbindungsleitung angepasst, so dass das Reinigungselement an der Innenwand der Verbindungsleitung anhaftenden Belag ablösen kann. Beispielsweise weist das Reinigungselement zumindest bereichsweise einen Querschnitt auf, der annähernd einem Querschnitt der Verbindungsleitung entspricht. Insbesondere ist vorgesehen, dass zumindest zwischen einem Teil des Reinigungselements und der Innenwandung der Verbindungsleitung kein oder nur ein geringes Spiel ausgebildet ist. Das Reinigungselement wird beispielsweise durch Druckluft angetrieben, die in die Verbindungsleitung eingebracht wird. Es können auch andere geeignete Fluide mit einem definierten Druck eingesetzt werden. Während das Reinigungselement die Verbindungsleitung beziehungsweise Ringleitung in dem Bereich zwischen dem Mischbehälter und der nachfolgenden produktverarbeitenden Einrichtung durchläuft, schiebt es in der Verbindungsleitung möglicherweise vorhandene Rohstoffmischung vor sich her. Diese wird sodann durch Öffnungen in der Verbindungsleitung im Bereich der nachfolgenden produktverarbeitenden Einrichtung in die produktverarbeitende Einrichtung überführt. Das Reinigungselement wird anschließend weiter in seine Parkposition befördert.

Gemäß einer Ausführungsform der Erfindung sind die Reinigungselemente beispielsweise Kunststoffkörper aus verschieden geformtem Material, welche exakt in die Verbindungsleitungen passen und mit Druckluft durch diese hindurchgetrieben werden. Hierbei liegen Dichtlippen an den Rohrwandungen an, und das Reinigungselement schiebt eventuell in den Verbindungsleitungen vorhandenes Restprodukt und / oder Fette bis zur nächsten produktverarbeitenden Einrichtung vor sich her. Das Material, welches von dem Reinigungselement in eine Mahlvorrichtung, beispielsweise Rührwerkskugelmühle, geschoben wird, kann über die Prozessluft, mit welcher das Reinigungselement bewegt werden kann, auch aus der Mahlvorrichtung herausgedrückt werden. Mit Hilfe der Reinigungselemente können die Verbindungsleitungen von den gegebenenfalls an den Innenwandflächen der Verbindungsleitungen anhaftenden Rückständen der körnigen und / oder pulverförmigen Rohstoffe der Rohstoffmischung befreit werden.

Die Anlage, insbesondere die Verbindungsleitungen der Anlage, ist speziell für die Reinigungselemente ausgebildet. Beispielsweise weisen die Innenwandflächen der Verbindungsleitungen speziell polierte Oberflächen auf. Die notwendigen Ventile sind so ausgebildet, dass die Reinigungselemente hingeführt werden können, so dass dabei kein Totraum entsteht, in dem sich Ablagerungen festsetzen können.

Gemäß einer bevorzugten Ausführungsform der Anlage umfasst die Anlage einen Mischbehälter, eine Veredelungsvorrichtung, einen Prozessbehälter und eine Mahlvorrichtung. Zumindest zwischen dem Mischbehälter und dem Prozessbehälter, dem Prozessbehälter und der Veredelungsvorrichtung und / oder zwischen dem Prozessbehälter und der Mahlvorrichtung ist jeweils eine Verbindungsleitung, beispielsweise in Form einer Ringleitung, mit Reinigungselement vorgesehen. Somit können die Verbindungsleitungen zwischen dem Mischbehälter und der Veredelungsvorrichtung und / oder zwischen dem Mischbehälter und dem Prozessbehälter und / oder zwischen dem Prozessbehälter und der Mahlvorrichtung jeweils sauber von der Rohstoff- und / oder Produktmischung gehalten werden.

Gemäß einer Ausführungsform der Erfindung ist eine weitere produktverarbeitende Einrichtung ein Prozessbehälter, der in einem oberen Behälterbereich mindestens eine Sprüheinrichtung zur Zuführung des mindestens einen flüssigen Rohstoffs umfasst. Die Sprüheinrichtung versprüht den flüssigen Rohstoff in mindestens einem Austrittskegel, der zumindest bereichsweise in Richtung einer Innenwandfläche des Prozessbehälters gerichtet ist. Wie bereits für den Mischbehälter beschrieben, können auch im Prozessbehälter mehrere Sprüheinrichtungen angeordnet sein, deren Austrittskegel sich in den Randbereichen überlappen, so dass die Innenwandflächen im oberen Bereich des Prozessbehälters vollständig angesprüht werden können.

Gemäß einer Ausführungsform der Erfindung sind den produktverarbeitenden Einrichtungen der Anlage, in die flüssiger Rohstoff als Reinigungsmittel eingesprüht werden kann und / oder die von flüssigem Rohstoff als Reinigungsmittel durchströmt werden können, jeweils erste Abflussleitungen zum Abführen des als Reinigungsmittel verwendeten flüssigen Rohstoffes zugeordnet. Alternativ oder zusätzlich kann der Anlage ein Sammelbehälter für den als Reinigungsmittel verwendeten flüssigen Rohstoff zugeordnet sein. In diesem Fall weisen die produktverarbeitenden Einrichtungen jeweils zweite Abflussleitungen zum Zuführen von als Reinigungsmittel verwendetem flüssigem Rohstoff zu dem Sammelbehälter auf.

Eine wichtige Funktion der vorbeschriebenen Anlage ist die Möglichkeit, die Anlage komplett zu reinigen, ohne diese auseinanderbauen zu müssen. Die Erfindung betrifft weiterhin ein Verfahren zur Reinigung von oben beschriebenen Anlagen zur Herstellung und / oder Aufbereitung von Confectionery- Massen. Erfindungsgemäß wird im Anschluss an eine Produktion der entleerte erste Mischbehälter mit flüssigem Rohstoff ausgesprüht und / oder durchströmt. Insbesondere werden die Innenwandflächen in einem oberen Bereich des ersten Mischbehälters mit flüssigem Rohstoff ausgesprüht, der dann an den Innenwandflächen nach unten läuft und sich im Bodenbereich des ersten Mischbehälters ansammelt. Für die Reinigung wird insbesondere eine bestimmte Fettmenge über den Aufgabeschacht in den ersten Mischbehälter eingepumpt. Das Einpumpen des Reinigungsfetts erfolgt über mindestens einen im Deckel angeordneten Sprühkopf, wobei alle im ersten Mischbehälter befindlichen Anbackungen am Deckel und / oder an den Seitenwänden des Mischbehälters herabgespült werden können. Insbesondere wird so viel Fett über den Sprühkopf in den ersten Mischbehälter eingesprüht, dass das in dem ersten Mischbehälter angeordnete und für die Reinigung eingeschaltete Rührwerk in dieses eintaucht. Bei diesem ersten Reinigungsschritt zur Reinigung des ersten Mischbehälters wird nur so viel flüssiges Fett eingesprüht, wie notwendig ist, damit die Rührscheibe des Rührwerks nicht leer läuft. Beispielsweise benötigt man für einen ersten Mischbehälter mit einem Ansatzvolumen von ca. 500 Liter zur Reinigung in etwa 50 bis 60 Liter Reinigungsfett. Weiterhin kann vorgesehen sein, dass das Fett über eine Transferpumpe und den mindestens einen Sprühkopf im Kreis mehrfach durch den ersten Mischbehälter gepumpt wird, um die Innenwandflächen des ersten Mischbehälters abzureinigen.

Gemäß einer weiteren Ausführungsform der Erfindung wird flüssiger Rohstoff als Reinigungsmittel einem zweiten Mischbehälter, insbesondere einem Prozessbehälter, zugeführt und in diese eingesprüht. Insbesondere kann es sich hierbei um flüssigen Rohstoff handeln, der zuvor bereits für die Reinigung des ersten Mischbehälters verwendet worden ist. Beispielsweise wird nach dem Spülen des Mischbehälters das dafür verwendete Fett über eine weitere Transferpumpe, insbesondere über den normalen Produktionsweg, in den Prozessbehälter eingebracht. Auch der Prozessbehälter verfügt über mindestens einen, vorzugsweise mindestens zwei Sprühköpfe, über welche der Prozessbehälter zumindest weitgehend komplett ausgesprüht und somit gereinigt werden kann. Während des Reinigungsvorganges ist das Rührwerk im Prozessbehälter ebenfalls angeschaltet und am Laufen. Auch hier kann vorgesehen sein, dass das Fett über eine Transferpumpe und den mindestens einen Sprühkopf im Kreis mehrfach durch den Prozessbehälter gepumpt wird, um die Innenwandflächen des Prozessbehälters abzureinigen. Die Sprühköpfe im Prozessbehälter sind nur vorhanden, um das Reinigungsfett in den Prozessbehälter einzusprühen. Bei einem normalen Produktionsprozess innerhalb der Anlage finden diese Sprühköpfe keine Verwendung. Um zu verhindern, dass die Sprühköpfe in dem Prozessbehälter beispielsweise mit in dem Reinigungsfett suspendierten Rückständen aus dem ersten Mischbehälter verstopfen, kann ein Filterelement vor dem Sprühkopf des Prozessbehälters angeordnet sein. Das Filterelement ist insbesondere dergestalt ausgebildet, dass es leicht entfernt und gereinigt oder ausgetauscht werden kann.

Nachdem der als Reinigungsmittel verwendete flüssige Rohstoff von dem ersten Mischbehälter zu dem zweiten Mischbehälter transportiert wurde, beispielsweise vermittels einer geeigneten Pumpe, kann die Verbindungsleitung zwischen dem ersten Mischbehälter und dem zweiten Mischbehälter von einem Reinigungselement durchfahren werden. Beispielsweise wird die Verbindungsleitung zwischen erstem Mischbehälter und dem Prozessbehälter nach dem Umpumpen des Reinigungsfetts aus dem erstem Mischbehälter in den Prozessbehälter von einem Reinigungselement durchlaufen, das die Verbindungsleitung entleert und anschließend in seine Parkposition weitergeführt wird. Auch die Leitung, über die das Reinigungsfett im Kreis durch den ersten Mischbehälter oder im Kreis durch den zweiten Prozessbehälter geleitet wird, kann mittels vergleichbarer Reinigungselemente gereinigt werden.

Gemäß einer Ausführungsform der Erfindung kann vorgesehen sein, dass der als Reinigungsmittel verwendete flüssige Rohstoff in einem Kreislauf zwischen dem ersten Mischbehälter und dem zweiten Mischbehälter transportiert wird. Beispielsweise kann die Verbindungsleitung zwischen dem ersten und dem zweiten Mischbehälter immer dann, wenn der gesamte flüssige Rohstoff vom ersten in den zweiten Mischbehälter überführt ist, durch ein Reinigungselement von eventuell noch an den Innenwänden der Verbindungsleitung anhaftenden Rückständen gesäubert werden.

Weiterhin kann vorgesehen sein, dass zur Reinigung des zweiten Mischbehälters in einem letzten Reinigungsschritt frischer flüssiger Rohstoff verwendet wird, der direkt aus einem entsprechenden Vorratsbehälter entnommen wird.

Das Fett aus dem Prozessbehälter kann dann in einen Restmassebehälter überführt oder über Ableitungen aus der Anlage entfernt oder zum Reinigen entweder über den Veredelungseinrichtung, beispielsweise einen Dünnschicht-Entlüfter / - Entfeuchter, und/oder über die Rührwerkskugelmühle gefahren werden. Sowohl der Dünnschicht-Entlüfter / -Entfeuchter als auch die Rührwerkskugelmühle werden dabei betrieben. Nach Abschluss der Reinigungsarbeiten kann der Bediener wiederum entscheiden oder aber es wird durch ein entsprechendes Programm vorgegeben, ob dieses Fett über eine gesonderte Leitung zur Entsorgung gepumpt wird, oder ob es in einen sogenannten Restmassebehälter eingebracht wird. Das im Restmassebehälter befindliche Fett, welches mit geringen Mengen an Produkt kontaminiert ist, kann für einen neuen Ansatz verwendet werden.

Gemäß einer weiteren Ausführungsform der Erfindung kann der mindestens eine erste Mischbehälter und / oder der zweite Mischbehälter mit einer zweiten und gegebenenfalls weiteren Mengen von dem als Reinigungsmittel verwendeten flüssigen Rohstoffs ausgesprüht werden. Diese zweite und / oder eine spätere Menge von dem als Reinigungsmittel verwendeten flüssigen Rohstoffs kann anschließend einer Veredelungseinrichtung zur Reinigung derselben zugeführt werden. Beispielsweise kann die zweite und / oder eine spätere Menge von dem als Reinigungsmittel verwendeten flüssigen Rohstoffs in einem Kreislauf geführt werden und zwischen der ersten und / oder zweiten Mischvorrichtung und der Veredelungseinrichtung zirkulieren. Dabei kann zusätzlich vorgesehen sein, dass nach jedem Durchlauf des als Reinigungsmittel verwendetem flüssigen Rohstoffs zwischen der ersten und / oder zweiten Mischvorrichtung und der Veredelungseinrichtung ein Reinigungselement die Verbindungsleitung durchfährt und diese von eventuellen Ablagerungen säubert.

Weiterhin kann vorgesehen sein, dass die erste, zweite und / oder eine spätere Menge von dem als Reinigungsmittel verwendeten flüssigen Rohstoffs durch eine Mahlvorrichtung geleitet wird, insbesondere mehrfach in einem Kreislauf durch eine Mahlvorrichtung geleitet wird. Die erste, zweite und / oder eine spätere Menge von dem als Reinigungsmittel verwendeten flüssigen Rohstoffs kann anschließend in einem Restmassebehälter gesammelt werden und / oder die erste, zweite und / oder eine spätere Menge von dem als Reinigungsmittel verwendeten flüssigen Rohstoffs wird aus der Anlage entfernt und einer Entsorgung zugeführt. Der Restmassebehälter enthält insbesondere Fett, dass bei einer Reinigung der Anlage verwendet worden ist und das Verunreinigungen mit Rohstoffen einer alten Produktcharge aufweisen kann. Dieses Fett kann beispielsweise für eine neue Produktcharge mit im Wesentlichen gleichen Inhaltsstoffen verwendet werden.

Gemäß einer Ausführungsform der Erfindung wird eine Verbindungsleitung zwischen dem zweiten Mischbehälter und der Mahlvorrichtung nach Entleeren des als Reinigungsmittel verwendeten flüssigen Rohstoffes von einem weiteren Reinigungselement durchlaufen und gereinigt, insbesondere von einem Reinigungselement, wie es bereits oben beschrieben worden ist. Insbesondere kann vorgesehen sein, dass das Reinigungselement nach der Abzweigung zur Mahlvorrichtung in der den zweiten Mischbehälter und die Mahlvorrichtung verbindenden Leitung stehen bleibt. Dadurch wird die Druckluft beziehungsweise das zum Antreiben des Reinigungselementes verwendete Fluid durch die Mahlvorrichtung geleitet und drückt das feinvermahlende Produkt aus der Mahlvorrichtung heraus. Anschließend wird das Reinigungselement wieder in eine Parkposition verfahren.

Je nachdem wie stark die Anlage verschmutzt ist, werden mehrere der beschriebenen Reinigungszyklen mit flüssigem Fett gefahren. Insbesondere sollte darauf geachtet werden, dass für die Reinigung der Veredelungseinrichtung Fett verwendet wird, dass möglichst keine bzw. wenige Verunreinigung aufweist. Insbesondere wird also für die Reinigung der Veredelungseinrichtung vorzugsweise Fett aus dem zweiten oder einem späteren Reinigungszyklus verwendet, während das Fett aus dem ersten Reinigungszyklus direkt aus dem Mischbehälter oder nach Durchlaufen des Prozessbehälter aus der Anlage entfernt oder dem Restmassebehälter zugeführt wird.

Anstelle von einem ersten Mischbehälter in Verbindung mit einer Veredelungseinrichtung, kann auch eine Conche verwendet werden. Hierbei gestaltet sich die Reinigung aufgrund der reduzierten Anzahl von Einzelmaschinen und Verbindungsleitungen noch einfacher. Analog zu oben beschriebener Anlage ist der Einsatz von Sprüheinrichtungen und Reinigungselementen in den Verbindungsleitungen vorgesehen.

Vorteilhaft ist bei der erfindungsgemäßen Anlage auch, dass bereits während der Produktion immer wieder eine Zwischenreinigung der produktverarbeitenden Einrichtungen und / oder der Verbindungsleitungen erfolgt bzw. durchgeführt werden kann, so dass bereits im Vorfeld die Ausbildung grober Verschmutzungen weitgehend verhindert werden kann.

Durch das mehrfache Verwenden von als Reinigungsmittel verwendetem flüssigen Rohstoff, indem dieser mehrfach in einem Kreislauf durch die produktverarbeitenden Einrichtungen der Anlage geleitet wird, kann die Geschwindigkeit und die Zeit, mit der das Reinigungsmittel auf Verschmutzungen einwirkt, erhöht werden. Diese beiden Faktoren spielen eine wichtige Rolle dabei, dass an Innenwandflächen anhaftende pulverige Rohstoffrückstände in Suspension gehen und somit leichter zu entfernen sind. Die Gefahr von Anbackungen besteht in der Anlage vor allem im ersten Mischbehälter, in den ein Teil der Rohstoffe in Pulverform eingefüllt wird. Im zweiten Mischbehälter und / oder in weiteren produktverarbeitenden Einrichtungen der Anlage sind die Rohstoffe in der Regel gut homogen vermischt, so dass beispielsweise der zweite Mischbehälter in der Regel rückstandslos entleert werden kann.

Die Anzahl, Art und Reihenfolge der Reinigung der Anlage, insbesondere ob die erste Menge Reinigungsfett, das zur Reinigung des ersten Mischbehälters verwendet worden ist, in weitere produktverarbeitende Einrichtungen weitergeleitet wird, einem Restmassebehälter zugeführt wird oder direkt verworfen wird, kann beispielsweise mittels einer Software vorgegeben sein. Der Reinigungszyklus kann beispielsweise gestartet werden, indem ein Bediener ein entsprechendes Programm startet, woraufhin die Reinigung automatisch gesteuert abläuft.

Innerhalb der vorbeschriebenen Anlage kann somit durch das vorbeschriebene Verfahren eine Reinigung der Komplettanlage durchgeführt werden, ohne dass diese dabei in ihre Einzelteile zerlegt werden muss. Es ist somit eine vorteilhafte CIP-Reinigung (Cleaning in place) möglich, die in diesem Industriezweig herkömmlicherweise nicht bekannt ist.

Weiterhin kann vorgesehen sein, dass die vorbeschriebenen Einrichtungen der Anlage auch für eine Sterilisation innerhalb der Anlage (sterilization in place = SIP) Anwendung findet, bei der beispielsweise zuerst Heißdampf eingesprüht und durch die Anlage geleitet wird und die Anlage anschließend mit sauberer beziehungsweise steriler Luft, beispielsweise mit sterilgefilterter Luft, getrocknet wird.

Das Verfahren zur Reinigung der Anlage kann alternativ oder zusätzlich zu den beschriebenen Merkmalen ein oder mehrere Merkmale und / oder Eigenschaften der zuvor beschriebenen Anlage umfassen. Ebenfalls kann die Anlage alternativ oder zusätzlich einzelne oder mehrere Merkmale und / oder Eigenschaften des beschriebenen Verfahrens aufweisen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Übersicht der Komponenten einer erfindungsgemäßen Anlage.
Figur 2 zeigt eine Darstellung einer Anordnung der Komponenten einer erfindungsgemäßen Anlage von oben.
Figur 3 zeigt einen Querschnitt durch eine erfindungsgemäße Anlage.
Figur 4 zeigt eine schematische Darstellung eines Ansatz- beziehungsweise Mischbehälters.
Figur 5 zeigt eine schematische Darstellung eines Prozessbehälters.
Figur 6 zeigt eine schematische Darstellung einer Rührwerkskugelmühle.
Figur 7 zeigt eine schematische Übersicht der Komponenten einer weiteren Ausführungsform einer erfindungsgemäßen Anlage.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Anlage oder das erfindungsgemäße Verfahren ausgestaltet sein können und stellen keine abschließende Begrenzung dar.

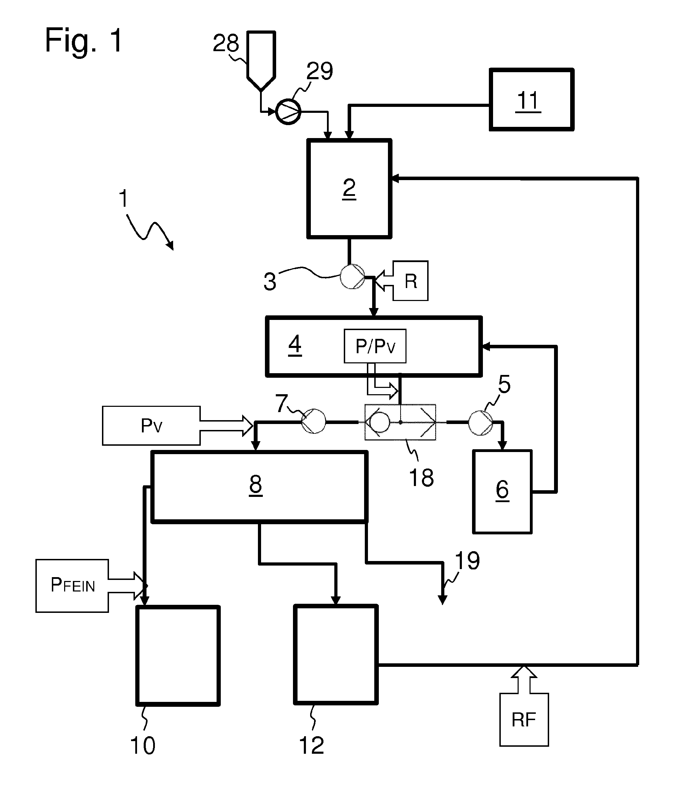

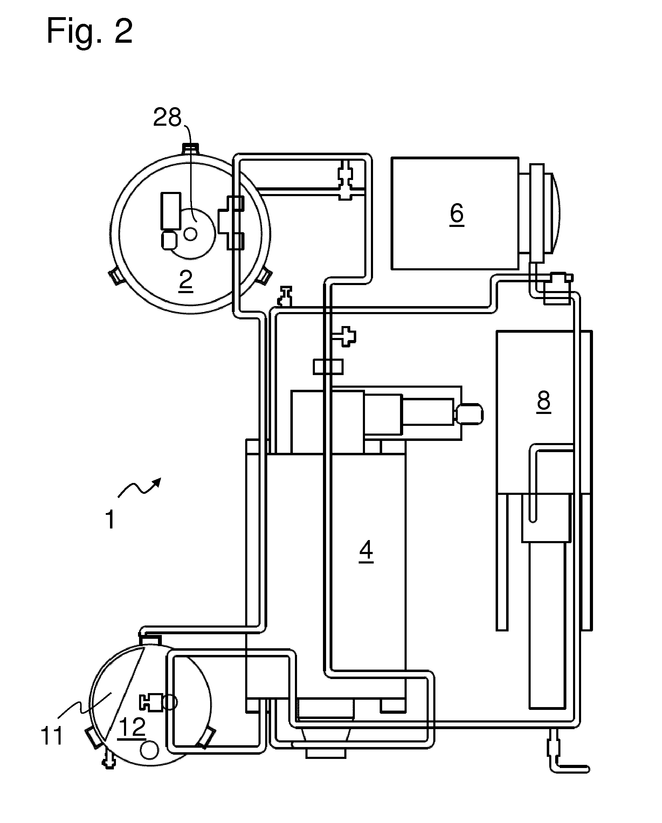

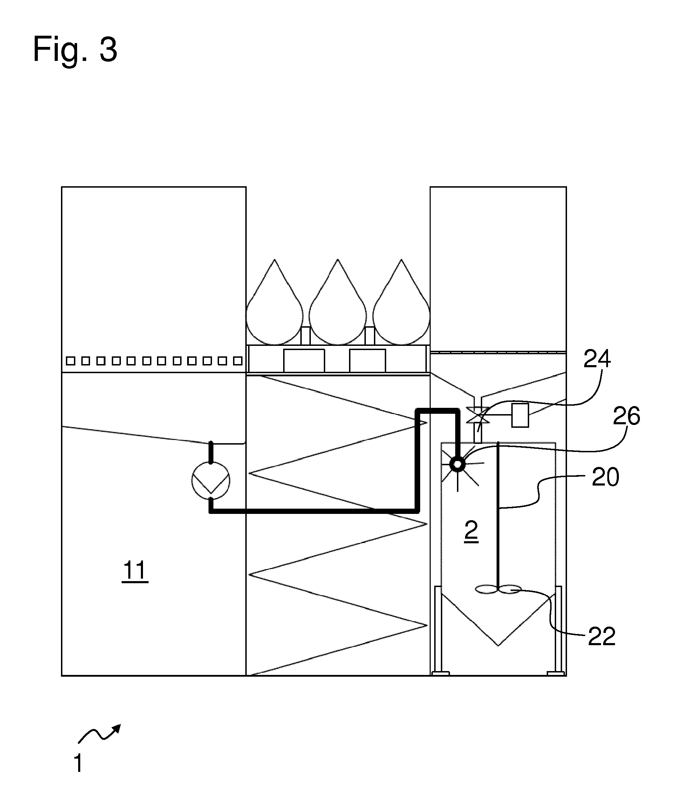

Figur 1 zeigt eine schematische Übersicht der Komponenten einer erfindungsgemäßen Anlage 1; Figur 2 zeigt eine Darstellung einer Anordnung der Komponenten einer erfindungsgemäßen Anlage 1 von oben und Figur 3 zeigt einen Querschnitt durch eine erfindungsgemäße Anlage 1.

Die für den Produktansatz der Confectionary- Masse benötigten Rohstoffe werden in einen Ansatz- beziehungsweise Mischbehälter 2 eingefüllt. Im Folgenden wird der Ansatz- beziehungsweise Mischbehälter 2 nur mit Mischbehälter 2 bezeichnet. Hierbei wird insbesondere das Fett vorgewärmt und in einem Fettvorlagebehälter 11 gespeichert, bevor es flüssig in den Mischbehälter 2 eingefüllt wird. Die restlichen Rohstoffe, beispielsweise Kristallzucker, Kakaopulver, Milchpulver und so weiter werden, vorzugsweise in fester Form, insbesondere pulverförmig, zugegeben. In dem Mischbehälter 2 werden die Rohstoffe kontinuierlich und gleichmäßig mit dem vorgelegten, temperierten Fett vermischt. Aus einem zusätzlichen separaten und gegebenenfalls beheizbaren Vorratsbehälter 28 können Additive wie Lecithin oder Ähnliches mittels einer Dosierpumpe 29 zugegeben werden. Nachdem alle pulverförmigen Rohstoffe im Fett eingemischt sind, wird das Rohstoffgemisch R vermittels geeigneter Pumpen 3 in einen Prozessbehälter 4 überführt. Im Prozessbehälter 4 wird die eingepumpte Mischung kontinuierlich in Bewegung gehalten, um das Absetzen von Kristallzucker oder anderen grobkörnigen Komponenten zu vermeiden. Durch das weitere Vermischen im Prozessbehälter 4 wird das Produktgemisch P gebildet.

Als nächster Prozessschritt erfolgt eine Veredelung des Produktgemisches P, beispielsweise durch ein Entlüften und / oder Entfeuchten und / oder Entgasen. Die Veredlung erfolgt im dargestellten Ausführungsbeispiel durch einen Dünnschicht-Entlüfter beziehungsweise -Entfeuchter 6, durch den Wasser und / oder flüchtige Bitterstoffe aus dem Produktgemisch P entfernt werden, so dass veredeltes Produkt Pv gebildet wird. In einer bevorzugten Ausführungsform wird das Produktgemisch P über einen Dünnschicht-Entlüfter / -Entfeuchter 6 zur Entlüftung gefahren. Hierzu wird das Produktgemisch P aus dem Prozessbehälter 4 insbesondere im Kreislaufverfahren durch den Dünnschicht-Entlüfter / -Entfeuchter 6 gefahren. Dies geschieht solange, bis die Entlüftung / Entgasung in Kombination mit der gewünschten Geschmacksentwicklung abgeschlossen ist. Beispielsweise wird das Produktgemisch P mittels einer geeigneten Pumpe 5 von dem Prozessbehälter 4 zu dem Dünnschicht-Entlüfter / -Entfeuchter 6 gepumpt und anschließend wieder in den Prozessbehälter zurückgeleitet. Alternativ wird das Produktgemisch P mittels einer geeigneten Pumpe 5 von dem Prozessbehälter 4 zu dem Dünnschicht-Entlüfter / - Entfeuchter 6 gepumpt und anschließend mit einer weiteren Pumpe (nicht dargestellt) von dem Dünnschicht-Entlüfter / -Entfeuchter 6 zu dem Prozessbehälter 4 zurück gepumpt.

Aus dem bereits beschriebenen beheizbaren Vorratsbehälter 28 für Additive wie z.B. Lecithin können mit einer separaten Pumpe 29* Additive auch direkt in den Prozessbehälter 4 zugegeben werden. Der Zeitpunkt dieser Additivzugabe kann frei gewählt werden und z.B. auch erst am Ende des Prozesses erfolgen.

In einem letzten Produktionsschritt wird das veredelte Produkt Pv aus dem Prozessbehälter 4 in eine Rührwerkskugelmühle 8 überführt. Beispielsweise wird das veredelte Produkt Pv mittels einer geeigneten Pumpe 7 in die Rührwerkskugelmühle gepumpt 8. Gemäß einer Ausführungsform ist zwischen dem Prozessbehälter 4 und dem Dünnschicht-Entlüfter / -Entfeuchter 6 beziehungsweise der Rührwerkskugelmühle 8 ein Umschaltventil 18 angeordnet, so dass das Produktgemisch P beziehungsweise (teil)veredelte Produkt Pv entweder dem Dünnschicht-Entlüfter / -Entfeuchter 6 oder der Rührwerkskugelmühle 8 zugeführt wird. Beispielsweise kann dem Umschaltventil 18 ein Sensor zugeordnet sein, der bestimmte Produkteeigenschaften misst, woraufhin eine Steuereinheit (nicht dargestellt) das Umschaltventil 18 ansteuert und entsprechend einstellt. In der Rührwerkskugelmühle 8 wird die gewünschte Endfeinheit des veredelten Produktes Pv hergestellt.

Anschließend wird das Produkt P_{FEIN} mit der gewünschten Endfeinheit weiter in einen externen Fertig-Produkttank 10 überführt. Dies kann beispielsweise vermittels einer Pumpe (nicht dargestellt) erfolgen.

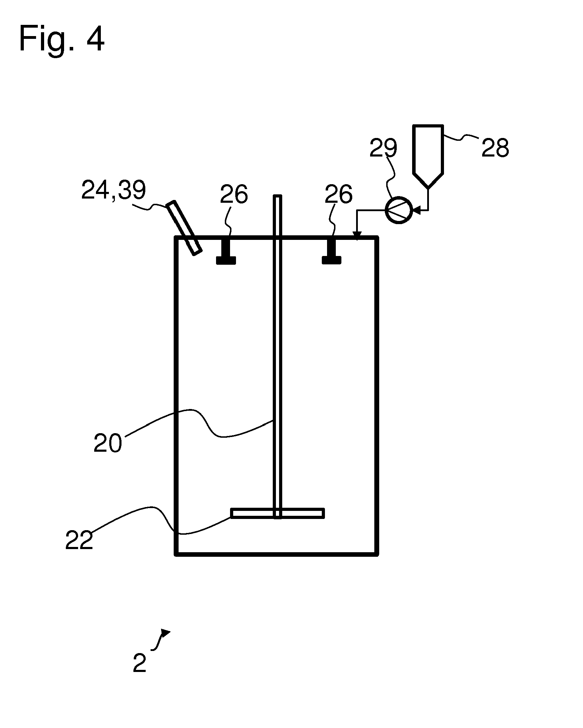

Figur 4 zeigt eine schematische Darstellung eines Mischbehälters 2. Von dem Fettvorlagebehälter 11 (vergleiche Figuren 1 bis 3) wird das flüssige Fett über mindestens eine Sprühkopfdüse 26 am Deckel des Ansatz- bzw. Mischbehälters 2 in diesen geleitet beziehungsweise gepumpt. Damit wird zu Beginn jedes neuen Ansatzes eine Vorreinigung des Mischbehälters 2 erzielt. Ein Teil des für den Ansatz benötigten Fettes wird für einen nachfolgenden Zwischenreinigungsschritt zurückgehalten. In dem Mischbehälter 2 bewegt sich eine Mischer- beziehungsweise Dissolverscheibe 22, die die nachfolgend zugefügten Rohstoffe kontinuierlich und gleichmäßig mit dem vorgelegten, temperierten, flüssigen Fett vermischt.

Aus einem zusätzlichen separaten (beheizbaren) Vorratsbehälter 28 können Additive wie Lecithin oder andere Zusatzstoffe mittels Dosierpumpen 29 zugegeben werden. Dies kann je nach ausgewählter Rezeptur automatisch erfolgen. Die pulverförmigen Rohstoffe werden über einen Rohstoffeinlass 24 in den mit Fett teilweise befüllten Mischbehälter eingefüllt. Dabei kann es sich insbesondere um eine Verlängerung des bereits im Zusammenhang mit den Figuren 2 bis 4 beschriebenen Aufgabetrichters 39 handeln. Durch die separate Aufgabemöglichkeit von pulverförmigen Rohstoffen und flüssigen fetthaltigen Rohstoffen und Additiven werden wirksam Anbackungen und / oder Verklebungen an den Aufgabestationen 35, 36 verhindert. Die Aufgabe der Additive aus dem zusätzlichen Vorratsbehälter 28 kann entweder programmgesteuert oder manuell durch den Bediener B erfolgen.

Nachdem alle pulverförmigen Rohstoffe im Mischbehälter 2 in das flüssige Fett eingemischt sind, wird das sogenannte Rohstoffgemisch R durch Pumpen 3 in den Prozessbehälter 4 überführt. Nachdem das Rohstoffgemisch R aus dem Mischbehälter 2 in den Prozessbehälter 4 überführt wurde, wird eine zurückgehaltene Restmenge Fett über die Reinigungsdüsen 26 in den Mischbehälter 2 eingebracht und anschließend in den Prozessbehälter 4 weitergepumpt. Mit dieser geringen Restfettmenge werden letzte Rohstoff-Bestandteile aus dem Mischbehälter 2 in den Prozessbehälter 4 (vergleiche Figur 9) überführt und zugleich eine Zwischenreinigung des Mischbehälters 2 durchgeführt. Durch Durchmischen des Rohstoffgemisches R und der Restmenge Fett im Prozessbehälter 4 erhält man die Produktgemisch P.

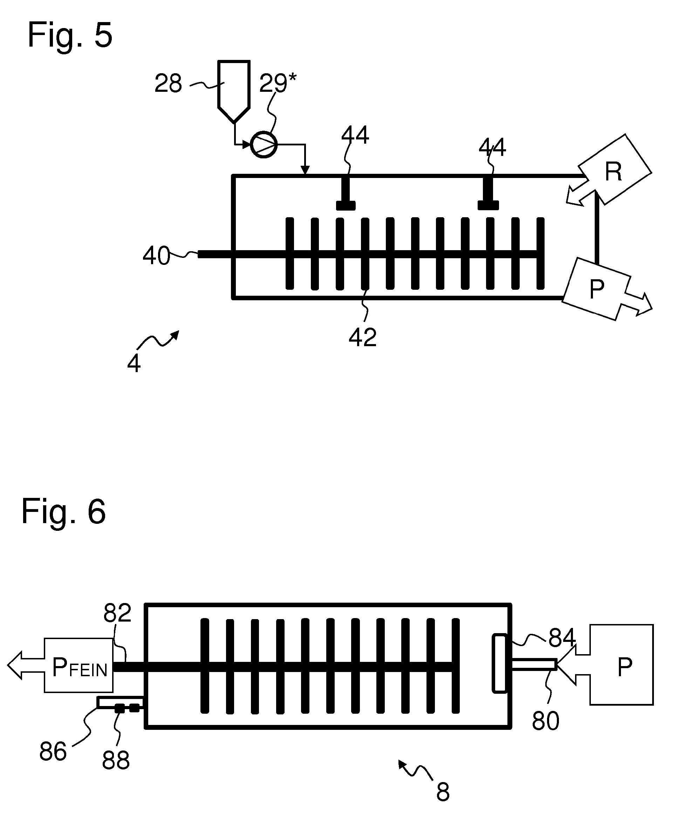

Figur 5 zeigt eine schematische Darstellung eines Prozessbehälters 4. Im Prozessbehälter 4 ist mindestens eine Mischwelle 40 angeordnet, welche das eingepumpte Rohstoffgemisch R und die Restmenge an Fett kontinuierlich in Bewegung hält und zu einem Produktgemisch P vermischt. Durch die kontinuierliche Bewegung wird zudem das Absetzen von Kristallzucker oder anderen grobkörnigen Komponenten des Produktgemisches P vermieden.

Der letzte Produktionsschritt besteht darin, bei dem veredelten Produkt Pv aus dem Prozessbehälter 4 (vergleiche auch Beschreibung zu Figur 1) die gewünschte Endfeinheit herzustellen. Dazu wird das veredelte Produkt Pv in eine Rührwerkskugelmühle 8 überführt, wie sie beispielhaft in Figur 6 dargestellt ist. Zu diesem Zweck wird eine bestimmte Menge an veredeltem Produkt Pv in die Rührwerkskugelmühle 8 eingefüllt, bis an dem Materialausgang 86 der Rührwerkskugelmühle 8 eine geringe Menge des veredelten Produktes Pv austritt. Dies wird durch Sensoren 88 gemessen. Die wichtigste Messgröße ist in diesem Fall die Temperatur, da die Produktaustrittstemperatur nach der Mühle höher ist als die Eintrittstemperatur (Temperatur zwischen 40° und 60°). Im gefüllten Zustand läuft die Rührwerkskugelmühle 8 für eine vorbestimmte Zeit, ohne dass weiteres veredeltes Produkt Pv hinzugepumpt bzw. in der Rührwerkskugelmühle 8 befindliches veredeltes Produkt Pv abgepumpt wird. Nach der vorgegebenen Zeit erreicht das veredelte Produkt Pv somit seine gewünschte Endfeinheit. Nach dieser Zeit wird das Produkt P_{FEIN} weiter in den externen Fertig- Produkttank 10 (vergleiche Figur 1) geführt. Gleichzeitig wird das Zuführen von nicht gemahlenem veredeltem Produkt Pv aus dem Prozessbehälter 4 fortgesetzt.

Durch diese Vorgehensweise wird die Menge an veredeltem Produkt Pv reduziert, die aufgrund von sich ändernden Betriebsbedingungen in der Anfahrphase noch nicht der geforderten Qualität entspricht und die Vermahlung kann somit ohne nennenswerte Verluste bzw. Abfallmengen durchgeführt werden. In einer weiteren Ausführungsform ist es, wie in herkömmlichen Verfahren möglich, das zu vermahlende Produkt P_{FEIN} im Kreis zu fahren. Im Einlassbereich 80 der Rührwerkskugelmühle 8 befindet sich ein Vorzerkleinerungsmodul 84 zur Vorzerkleinerung von Grobprodukten, welches sogar in der Lage ist, Nüsse bzw. Keksbruch oder dergleichen zu zerkleinern und auf die optimale Eingangsfeinheit der Rührwerkskugelmühle 8 einzustellen.

Eine weitere wichtige Funktion der Anlage 1 ist die Möglichkeit, die Anlage 1 komplett zu reinigen, ohne diese auseinanderbauen zu müssen. Für die Reinigung wird eine bestimmte Fettmenge aus dem Fettvorlagebehälter 11 in den Mischbehälter 2 eingepumpt. Das Einpumpen erfolgt über mindestens einen im Deckel des Mischbehälters 2 angeordneten Sprühkopf 26, wodurch alle im Mischbehälter 2 befindlichen Anbackungen am Deckel und/oder an den Seitenwänden herabgespült werden. Nach dem Spülen des Mischbehälters 2 wird das verwendete Fett über den normalen Produktionsweg in den Prozessbehälter 4 eingebracht. Auch der Prozessbehälter 4 verfügt über mindestens einen, vorzugsweise mindestens zwei Sprühköpfe 44, über welche der komplette Prozessbehälter 4 ausgesprüht und somit gereinigt werden kann. Das Fett aus dem Prozessbehälter 4 kann dann zum Reinigen entweder über den Dünnschicht-Entlüfter/ -Entfeuchter 6 und/oder über die Rührwerkskugelmühle 8 gefahren werden. Dies ist insbesondere über das Umschaltventil 18 steuerbar. Nach Abschluss der Reinigungsarbeiten kann der Bediener B entscheiden, ob das Fett über eine gesonderte Entsorgungsleitung 19 zur Entsorgung gepumpt wird, oder ob es in einen sogenannten Restmassebehälter 12 (vergleiche Figur 1) eingebracht wird. Das im Restmassebehälter 12 befindliche Fett RF, welches mit geringen Mengen an Produkt kontaminiert ist, kann für einen neuen Produktionsansatz verwendet werden.

Um die einzelnen die produktverarbeitenden Einrichtungen verbindenden Leitungen der Anlage 1 zwischen den einzelnen Verfahrensschritten und im Anschluss an eine Produktion reinigen zu können, verfügt das System weiterhin über ein Reinigungssystem mit Reinigungselementen. Mit Hilfe der Reinigungselemente können hochviskose Flüssigkeiten, pastöse Medien, auch Pulver und Granulate, annähernd restlos aus den Leitungen entfernt werden. Dabei wird ein annähernd kugelförmiges, in der Mitte tailliertes Reinigungselement mit Wasser oder Druckluft durch das Leitungssystem gepresst. Das Reinigungselement weist zumindest bereichsweise eine Querschnittsfläche auf, die weitgehend der Querschnittsfläche der Leitungen entspricht, so dass das Reinigungselement ohne oder nur mit geringem Spiel in der Leitung angeordnet ist. Das Reinigungselement schiebt das aus der Leitung zu entfernende Medium vor sich her. Die eingesetzten Reinigungselemente sind Kunststoffkörper aus verschieden geformtem Material, welche exakt in die Rohrleitungen passen und mit Druckluft durch diese hindurchgetrieben werden. Hierbei liegen Dichtlippen an den Rohrwandungen an, und das Reinigungselement schiebt eventuell in den Leitungen vorhandenes Restprodukt und/oder Fette bis zur nächsten produktverarbeitenden Einrichtung vor sich her. Das Material, welches von dem Reinigungselement beispielsweise in die Rührwerkskugelmühle 8 geschoben wird, kann über die Prozessluft, mit welcher das Reinigungselement bewegt werden kann, auch aus der Rührwerkskugelmühle 8 herausgedrückt werden.

Vorzugsweise sind Verbindungsleitungskreisläufe vorgesehen, beispielsweise ist ein erster Verbindungsleitungskreislauf zwischen dem Mischbehälter 2 und dem Prozessbehälter 4 vorgesehen. Ein zweiter Ringkreislauf kann zwischen Prozessbehälter 4 und Dünnschicht-Entlüfter / -Entfeuchter 6 vorgesehen sein. Die Funktion wird beispielhaft für den ersten Verbindungsleitungskreislauf zwischen dem Mischbehälter 2 und dem Prozessbehälter 4 beschrieben. Das Reinigungselement wird durch die Leitung zwischen dem Mischbehälter 2 und dem Prozessbehälter 4 geschoben und schiebt dabei Restprodukt vor sich her, das in den Prozessbehälter 4 überführt wird, beispielweise durch Öffnungen in der Verbindungsleitung, während das Reinigungselement weiter in seine vorzugsweise dem Mischbehälter 2 zugeordnete Parkposition gefahren wird. Insbesondere werden mit einem ersten Reinigungselement nach jedem Produktionsschritt eine erste Verbindungsleitung zwischen Mischbehälter 2 und Prozessbehälter 4 beziehungsweise mit einem zweiten Reinigungselement eine zweite Verbindungsleitung zwischen Prozessbehälter 4 und Dünnschicht-Entlüfter / -Entfeuchter 6 gereinigt. Da das Reinigungselement nicht um Ecken fahren kann, sind die Verbindungsleitungen mit entsprechenden Kurven ausgestattet, an denen ein Festsetzen von Produkt bereits aufgrund der Form, insbesondere in Verbindung mit einer antihaftenden Oberfläche, erschwert ist.

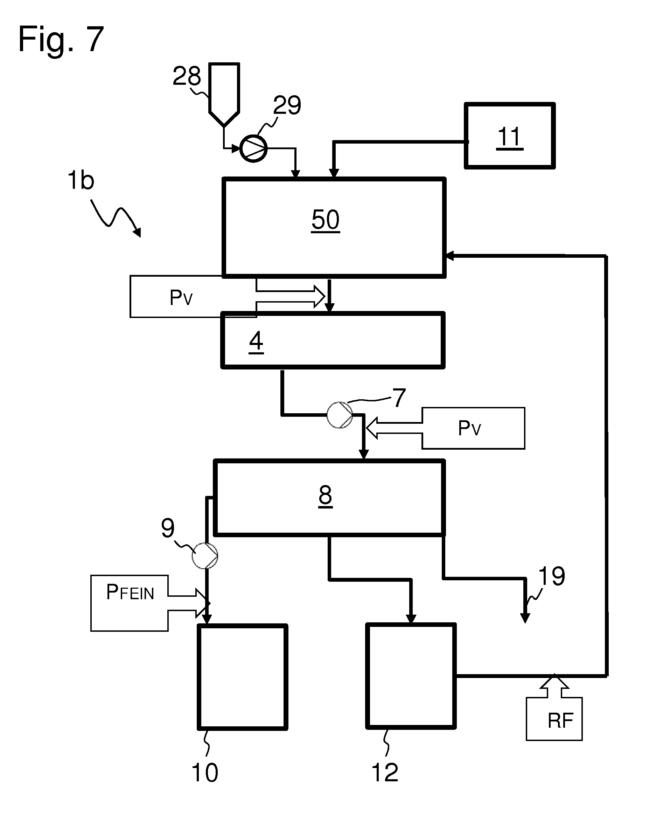

Figur 7 zeigt eine schematische Übersicht der Komponenten einer weiteren Ausführungsform einer erfindungsgemäßen Anlage 1 b. Diese unterscheidet sich von der vorab beschriebenen Anlage 1 dadurch, dass zur Verarbeitung von Schokoladenmassen und hochwertigen Zusammensetzungen anstelle des Mischbehälters 2 und des Dünnschicht-Entlüfters / -Entfeuchters 6 ein Conchiervorrichtung 50 zum Einsatz kommt. Hiermit sind eine besonders intensive Durchmischung der Masse sowie die Einstellung der Rheologie, d.h. des Verformungs- und Fließverhaltens der Masse, und des Geschmacks möglich. Dabei erfolgt die Zugabe der Rohstoffe und / oder Additive in die Conchiervorrichtung 50, in der dann auch die Einstellung der gewünschten rheologischen Eigenschaften und des Geschmacks erfolgt. Auch hier kann das oben beschriebene Prinzip der Verwendung von Sprühköpfen zur Zugabe von verflüssigten Fettbestandteilen zum Zuge kommen.

Aus der Conchiervorrichtung 50 wird das Produkt Pv dann entweder in einer Passage durch eine Rührwerkskugelmühle 8 gefahren oder in einem Kreislauf, um die gewünschte Endfeinheit P_{FEIN} zu erreichen. Zur Steigerung der Produktionskapazität kann ein Zwischenbehälter verwendet werden. Beispielsweise ist optional ein Prozessbehälter 4 vorhanden, um den Durchsatz der Anlage 1 b zu erhöhen. Insbesondere kann ein Teil des durch die Conchiervorrichtung 50 hergestellten Produktes Pv in dem Prozessbehälter 4 zwischengelagert werden, während ein anderer Teil bereits in der Rührwerkskugelmühle 8 weiter vermahlen wird. Das fertig conchierte Gemisch Pv kann aus dem Prozessbehälter 4 entweder in einer Passage (wie oben beschrieben) oder im Kreislauf zur Vermahlung durch die Rührwerkskugelmühle 8 gepumpt werden, um die geforderte Endfeinheit P_{FEIN} zu erreichen.

Die oben beschriebene Möglichkeit der Vor-, Zwischenreinigung und Endreinigung durch den Einsatz von Sprühdüsen, die Zurückhaltung einer Restfettmenge und durch die Verwendung von Fett als Reinigungsmittel kann in dieser Ausführungsform analog durchgeführt werden. Insbesondere gestaltet sich aufgrund der deutlich geringeren Anzahl von Einzelmaschinen die Reinigung der Anlage 1 b mit Conchiervorrichtung 50 einfacher als bei der in den Figuren 1 bis 11 beschriebenen Anlage 1. Analog zur ersten beschriebenen Ausführungsform ist der Einsatz von Sprühdüsen (26, 44 vergleiche Figuren 4 und 5) und der vorbeschriebenen Reinigungstechnologie mit Reinigungselementen innerhalb der Verbindungsleitungen der Anlage 1 b möglich.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Anlage
- 2: Ansatz- beziehungsweise Mischbehälter / Mischbehälter
- 3: Pumpe
- 4: Prozessbehälter
- 5: Pumpe
- 6: Dünnschicht-Entlüfter / -Entfeuchter
- 7: Pumpe
- 8: Rührwerkskugelmühle
- 10: Produkttank (extern)
- 11: Fettvorlagebehälter
- 12: Restmassebehälter
- 18: Umschaltventil
- 19: Entsorgungsleitung
- 20: Rührwelle
- 22: Rührscheibe
- 24: Rohstoffeinlass
- 26: Reinigungs- / Fettdüsen
- 28: Vorratsbehälter für Additive
- 29: Dosierpumpe
- 40: Rührwelle
- 42: Rührorgane
- 44: Reinigungsdüsen
- 50: Conchiervorrichtung
- 80: Materialeinlass
- 82: Rührwelle
- 84: Vorzerkleinerungsmodul
- 86: Materialauslass
- 88: Sensoren
- B: Bediener / Bedienpersonal
- R: Rohstoffgemisch
- RF: Restmasse- Fett
- P: Produktmischung
- P_{FEIN}: vermahlenes Produkt
- Pv: veredeltes Produkt

## Patentansprüche

1. Anlage (1, 1 b) zur Herstellung und / oder Aufbereitung von Confectionery-Massen aus mindestens einem flüssigen Rohstoff und körnigen und / oder pulverförmigen Rohstoffen, umfassend mindestens einen ersten Mischbehälter (2, 50) und mindestens eine weitere produktverarbeitende Einrichtung (4, 6, 8), wobei der erste Mischbehälter (2 ,50) mindestens einen Rohstoffeinlass (24) und einen Produktauslass und eine Mischvorrichtung (22) zum zumindest weitgehend homogenen Vermischen der Rohstoffe aufweist, **dadurch gekennzeichnet, dass** zumindest der Mischbehälter (2, 50) in einem oberen Behälterbereich mindestens eine Sprüheinrichtung (26) zur Zuführung des mindestens einen flüssigen Rohstoffs umfasst, wobei mindestens ein Austrittskegel der Sprüheinrichtung (26) zumindest bereichsweise in Richtung einer Innenwandfläche des ersten Mischbehälters (2, 50) gerichtet ist und wobei der mindestens eine Austrittskegel die gesamte Innenwandfläche und / oder Deckenfläche im oberen Behälterbereich des ersten Mischbehälters (2, 50) abdeckt.

2. Anlage (1, 1 b) nach Anspruch 1, wobei die Innenwandflächen des ersten Mischbehälters (2, 50) und / oder die Innenwandflächen weiterer produktverarbeitender Einrichtungen (2, 50, 4, 6, 8) weitgehend gerundet, insbesondere ohne Ecken, ausgebildet sind und / oder wobei die Oberflächen der Innenwandflächen weitgehend antihaftende Eigenschaften und / oder eine Antihaft- Beschichtung aufweisen.

3. Anlage (1, 1 b) nach einem der voranstehenden Ansprüche, wobei zwei prozesstechnisch miteinander gekoppelte produktverarbeitende Einrichtungen (2, 50, 4, 6, 8) über eine Verbindungsleitung verbunden sind und wobei in der Verbindungsleitung ein entlang der Verbindungsleitung bewegliches Reinigungselement angeordnet ist, wobei das Reinigungselement zumindest bereichsweise einen Querschnitt aufweist, der annähernd einem Querschnitt der Verbindungsleitung entspricht und wobei zwischen der Innenwandung der Verbindungsleitung und dem Reinigungselement zumindest bereichsweise kein oder nur ein geringes Spiel ausgebildet ist.

4. Anlage (1, 1 b) nach einem der voranstehenden Ansprüche, wobei eine weitere produktverarbeitende Einrichtung ein Prozessbehälter (4) ist, der in einem oberen Behälterbereich mindestens eine Sprüheinrichtung (44) zur Zuführung des mindestens einen flüssigen Rohstoffs umfasst, wobei der mindestens eine Austrittskegel der Sprüheinrichtung (44) zumindest bereichsweise in Richtung einer Innenwandfläche des Prozessbehälters (4) gerichtet ist.

5. Anlage (1, 1 b) nach einem der voranstehenden Ansprüche, wobei den produktverarbeitenden Einrichtungen (2, 50, 4, 6, 8) der Anlage (1, 1 b) jeweils erste Abflussleitungen (19) zum Abführen von als Reinigungsmittel verwendetem flüssigem Rohstoff (RF) zugeordnet sind.

6. Anlage (1, 1 b) nach einem der voranstehenden Ansprüche, wobei der Anlage (1, 1 b) ein Sammelbehälter (12) für als Reinigungsmittel verwendetem flüssigem Rohstoff (RF) zugeordnet ist und wobei den produktverarbeitenden Einrichtungen (2, 50, 4, 6, 8) der Anlage (1, 1 b) jeweils zweite Abflussleitungen zum Zuführen von als Reinigungsmittel verwendetem flüssigem Rohstoff (RF) zu dem Sammelbehälter (12) zugeordnet sind.

7. Verfahren zur Reinigung einer Anlage zur Herstellung von Confectionery-Massen nach einem der Ansprüche 1 bis 6, wobei der erste Mischbehälter (2, 50) mit flüssigem Rohstoff ausgesprüht und / oder durchströmt wird.

8. Verfahren nach Anspruch 7, wobei weitere produktverarbeitende Einrichtungen (4, 6, 8) der Anlage (1, 1 b) mit flüssigem Rohstoff ausgesprüht und / oder durchströmt werden.

9. Verfahren nach Anspruch 7 oder 8, wobei die Innenwandflächen des ersten Mischbehälters (2, 50) und / oder der produktverarbeitenden Einrichtungen (4, 6, 8) der Anlage (1, 1 b) zumindest bereichsweise mit flüssigem Rohstoff ausgesprüht werden, wobei zumindest weitgehend die gesamten Innenwandflächen des Innenraums mit flüssigem Rohstoff benetzt werden.

10. Verfahren nach einem der Ansprüche 7 bis 9, wobei eine erste Menge an flüssigem Rohstoff in den ersten Mischbehälter (2, 50) eingesprüht wird und wobei die erste Menge von als Reinigungsmittel verwendetem flüssigem Rohstoff aus der Anlage (1, 1 b) entfernt wird, einem Sammelbehälter (12) zugeführt wird und / oder einer weiteren produktverarbeitenden Einrichtung (4, 6, 8) der Anlage (1, 1 b) zugeführt wird.

11. Verfahren nach einem der Ansprüche 7 bis 10, wobei flüssiger Rohstoff als Reinigungsmittel einem zweiten Mischbehälter, insbesondere einem Prozessbehälter (4), zugeführt und in diese eingesprüht wird.

12. Verfahren nach Anspruch 111, wobei der als Reinigungsmittel verwendete flüssige Rohstoff von dem ersten Mischbehälter (2, 50) zu dem zweiten Mischbehälter (4) transportiert wird und wobei eine Verbindungsleitung zwischen dem ersten Mischbehälter (2, 50) und dem zweiten Mischbehälter (4) im Anschluss von einem Reinigungselement durchfahren wird.

13. Verfahren nach einem der Ansprüche 7 bis 12, wobei der als Reinigungsmittel verwendete flüssige Rohstoff in einem Kreislauf durch den ersten Mischbehälter (2, 50) und / oder in einem Kreislauf durch den zweiten Mischbehälter (4) transportiert wird und / oder wobei der als Reinigungsmittel verwendete flüssige Rohstoff in einem Kreislauf zwischen dem ersten Mischbehälter (2, 50) und dem zweiten Mischbehälter (4) transportiert wird.

14. Verfahren nach einem der Ansprüche 7 bis 13, wobei der mindestens eine erste Mischbehälter (2) und / oder der zweite Mischbehälter (4) mit einer zweiten und gegebenenfalls weiteren Mengen von einem als Reinigungsmittel verwendeten flüssigen Rohstoff ausgesprüht wird und wobei die zweite und / oder eine spätere Menge von dem als Reinigungsmittel verwendeten flüssigen Rohstoffs einer Veredelungseinrichtung (6) zur Reinigung derselben zugeführt wird.

15. Verfahren nach Anspruch 14, wobei die zweite und / oder eine spätere Menge von dem als Reinigungsmittel verwendeten flüssigen Rohstoffs in einem Kreislauf zwischen der ersten und / oder der zweiten Mischvorrichtung (2, 4) und der Veredelungseinrichtung (6) geleitet wird und wobei nach jedem Durchlauf des als Reinigungsmittel verwendetem flüssigen Rohstoffs zwischen der ersten und / oder zweiten Mischvorrichtung (4) und der Veredelungseinrichtung (6) ein Reinigungselement die Verbindungsleitung durchfährt und säubert.

16. Verfahren nach einem der Ansprüche 14 oder 15, wobei die erste, zweite und / oder eine spätere Menge von dem als Reinigungsmittel verwendeten flüssigen Rohstoffs mehrfach in einem Kreislauf durch eine Mahlvorrichtung (8) geleitet wird und / oder wobei die erste, zweite und / oder eine spätere Menge von dem als Reinigungsmittel verwendeten flüssigen Rohstoffs durch eine Mahlvorrichtung (8) geleitet und in einem Restmassebehälter (12) gesammelt wird und / oder wobei die erste, zweite oder eine spätere Menge an als Reinigungsmittel verwendetem flüssigem Rohstoff durch eine Mahlvorrichtung (8) geleitet und aus der Anlage (1, 1 b) entfernt wird.
